# EUROPÄISCHE PATENTSCHRIFT

(11) **EP 0 363 619 B1**
(45) Veröffentlichungstag und Bekanntmachung des Hinweises auf die Patenterteilung: **27.07.1994**
(21) Anmeldenummer: 89115905.5
(22) Anmeldetag: 29.08.1989
(51) Int. Cl.: G01S 3/02

(54) **Hochfrequenzpeiler für Kraftfahrzeuge**
High-frequency direction finding device for motor vehicles
Dispositif de détermination de la direction d'ondes haute-fréquence pour des automobiles

(30) Priorität: 08.10.1988 DE 3834331
(43) Veröffentlichungstag der Anmeldung: 18.04.1990
(73) Patentinhaber: Rohde & Schwarz GmbH & Co. KG, D-81671 München (DE)
(72) Erfinder: Hämmerle, Richard, Dr.-Ing., D-8011 Kirchheim (DE); Ernst, Bernhard, Dipl.-Ing., D-8011 Anzing (DE)
(74) Vertreter: Graf, Walter, Dipl.-Ing.

(56) Entgegenhaltungen:
- DE-A- 2 525 485
- DE-A- 3 126 867
- DE-A- 3 428 726
- DE-C- 705 187
- GB-A- 2 168 562
- PATENT ABSTRACTS OF JAPAN, Band 10, Nr. 57 (P-434)[2114], 7. März 1986;& JP-A-60 200 181 (HITACHI ZOSEN) 09-10-1985
- TCI-Firmendruckschrift "A new Approach to the Problem of HF Vehicular Radio Direction Finding, Dezember 1972.
- Technische Mitteilungen AEG-Telefunken 68, 1978, 3/4, S. 149-152

## Beschreibung

Die Erfindung betrifft einen Hochfrequenzpeiler laut Oberbegriff des Patentanspruches.

Ein Hochfrequenzpeiler dieser Art ist bekannt (TCI-Firmendruckschrift "A New Approach to the Problem of HF Vehicular Radio Direction Finding", Dez. 1972). Hierbei sind die Sensoren beispielsweise Ferritantennen oder Koaxialdipolschleifen, die sichtbar am Schiff oder Hubschrauber befestigt sind. Die Musterdatensätze, welche die Struktur des Schiffes berücksichtigen und mit denen bei der eigentlichen Messung die mit den Sonden gewonnenen Meßdatensätze verglichen und ausgewertet werden, werden errechnet und im Auswertgerät eingespeichert. Für unterschiedlich strukturierte Fahrzeuge ist die Berechnung der Musterdatensätze sehr aufwendig und schwierig, ein Peiler dieser Art kann deshalb nicht kurzfristig auf unterschiedliche Fahrzeuge umgerüstet werden. Ein solcher Peiler könnte im Prinzip zwar auch an einem Kraftfahrzeug angebracht werden, die Sensoren wären jedoch auch hier von außen sichtbar und ein so ausgerüstetes Kraftfahrzeug könnte daher nicht unbemerkt bewegliche Ziele unauffällig verfolgen, wie dies für Polizei- und Überwachungsaufgaben im Straßenverkehr nötig ist.

Es ist daher Aufgabe der Erfindung, einen Hochfrequenzpeiler für Kraftfahrzeuge zu schaffen, bei dem die Sensoren möglichst unsichtbar am Kraftfahrzeug angebracht sind und bei dem die Musterdatensätze einfach und schnell ermittelt werden können.

Diese Aufgabe wird ausgehend von einem Hochfrequenzpeiler laut Oberbegriff des Patentanspruches durch dessen kennzeichnende Merkmale gelöst.

Beim erfindungsgemäßen Hochfrequenzpeiler sind die Sensoren in unmittelbarer Nähe der Oberflächenstruktur des Fahrzeuges angebracht, sie sind also praktisch unsichtbar in die Karrosserie des Fahrzeuges integriert und damit von außen nicht sichtbar. Ein mit einem solchen erfindungsgemäßen Peiler ausgerüstetes Kraftfahrzeug kann daher unerkannt andere Kraftfahrzeuge unauffällig verfolgen, ohne daß der Verfolgte erkennt, daß das Verfolgungsfahrzeug mit einem Hochfrequenzpeiler ausgerüstet ist. Die Erfindung macht sich ferner die Erkenntnis zunutze, daß die Musterdatensätze durch einen Eichvorgang gewonnen werden, bei dem die Fahrzeugstruktur, die beliebig sein kann, automatisch mit in die Musterdatensätze einbezogen wird. Obwohl die Sonden in unmittelbarer Nähe der Oberflächenstruktur des Fahrzeugs angebracht sind und deren Ausgangsspannungen in erster Näherung daher im wesentlichen von den Oberflächenströmen der Fahrzeugstruktur und damit auch die Empfindlichkeit von der Fahrzeugstruktur und der Ankopplung der Sonden an die Fahrzeugstruktur bestimmt werden, können durch den Eichvorgang die Musterdatensätze exakt ermittelt werden. Durch diese Art der Ermittlung der Musterdatensätze durch einen einmaligen Eichvorgang ist es damit möglich, die Sonden unsichtbar am Kraftfahrzeug anzubringen.

Beim Eichvorgang wird beispielsweise ein mobiler Hochfrequenz-Eichsender um das mit den unsichtbaren Sonden ausgestattete Kraftfahrzeug herumgeführt oder es wird umgekehrt das Kraftfahrzeug, das neben einem Hochfrequenz-Eichsender aufgestellt ist, um seine Achse gedreht. Auf diese Weise wird für verschiedene Einfallsrichtungen aus allen Sondenspannungen der jeweilige Musterdatensatz ermittelt und im Auswertgerät abgespeichert. Diese für verschiedene Frequenzen ermittelten Musterdatensätze werden dann später bei der Ermittlung der Einfallsrichtung eines unbekannten Senders mit den von diesem unbekannten Sender gewonnenen Meßdatensätzen verglichen. Der Vergleich zwischen den Meß- und Musterdatensätzen kann beispielsweise durch Minimalisierung des mittleren Fehlerquadrates (LMS, Least Mean Square) oder durch Berechnung des Korrelationskoeffizienten erfolgen.

Die Meßdatensätze bzw. beim Eichvorgang die Musterdatensätze werden beispielsweise dadurch gewonnen, daß die von einzelnen Sonden gewonnenen komplexen Meßspannungen nach Betrag und Phase bezogen auf eine Referenzspannung ermittelt werden und für einen vollen Abtastzyklus aller Sonden aus diesen einzelnen Betrags- und Phasenwerten der einzelnen Sonden ein entsprechender Datensatz zusammengestellt wird, der beim Eichvorgang dann abgespeichert wird bzw. beim eigentlichen Peilvorgang als Meßdatensatz mit dem abgespeicherten Musterdatensatz verglichen wird. Die Referenzspannung kann über eine zusätzliche gesonderte Sonde, beispielsweise eine Rundstrahlantenne, gewonnen werden, es könnten jedoch auch jeweils zur Ermittlung von Betrag und Phase der Meßspannungen die Empfangsspannungen von zwei oder mehreren Sonden gegenseitig berücksichtigt werden, also eine der Sonden jeweils als Referenz benutzt werden.

Die Sonden können von beliebiger Bauart sein, sie können auch an den verschiedenartigsten Kraftfahrzeugtypen und an beliebigen Stellen des Kraftfahrzeugs angebracht werden, da all dies bei der Eichung automatisch berücksichtigt wird. Durch Löschen der abgespeicherten Musterdatensätze kann der Peiler auch sehr einfach wieder entschärft werden und es kann dann anschließend gegebenenfalls auf einem anderen Fahrzeug ein neuer entsprechender Musterdatensatz durch Eichung eingespeichert werden.

## Patentansprüche

1. Hochfrequenzpeiler für Kraftfahrzeuge, bei dem über mehrere am Fahrzeug angebrachte Sensoren komplexe Meßspannungen und daraus Meßdatensätze gewonnen werden, aus denen unter Berücksichtigung von die Fahrzeugstruktur einbeziehenden Musterdatensätzen die Einfallsrichtung eines zu peilenden Hochfrequenzsenders bestimmt wird, dadurch **gekennzeichnet,**
daß die Sensoren Sonden sind, die in unmittelbarer Nähe der Oberflächenstruktur des Fahrzeuges angebracht sind und Ausgangsspannungen auskoppeln, die in erster Näherung den Oberflächenströmen der benachbarten Fahrzeugoberflächenstruktur entsprechen,
und daß die Musterdatensätze für verschiedene Einfallsrichtungen durch einen einmaligen Eichvorgang mittels eines Hochfrequenz-Eichsenders, dessen Ort bekannt ist, gewonnen und gespeichert werden.

## Claims

1. Radio-frequency direction finder for motor vehicles, wherein a plurality of sensors mounted on the vehicle are used to obtain complex unknown voltages and thence measurement data records from which the direction of incidence of a radio-frequency transmitter from which a bearing is to be taken is determined taking account of master data records which include vehicular structure,
characterised in that
the sensors are probes which are mounted in direct proximity to the vehicular surface structure and couple out output voltages that correspond in a first approximation to the surface currents of the adjacent vehicular surface structure,
and that the master data records for different directions of incidence are obtained and stored by a single calibration operation using a radio-frequency calibrating transmitter whose position is known.

## Revendications

1. Dispositif pour déterminer la direction d'ondes haute fréquence de véhicules automobiles, selon lequel on détermine à l'aide de plusieurs capteurs équipant le véhicule, des tensions de mesure complexes et des jeux de données de mesure qui en découlent, pour déterminer la direction d'incidence d'un émetteur haute fréquence en tenant compte des jeux de données-modèles intégrant la structure du véhicule,
caractérisé en ce que :
- les capteurs sont des sondes prévues à proximité immédiate de la structure de la surface du véhicule et les tensions de sortie sont découplées lorsqu'elles correspondent en première approximation aux courants de surface de la proche structure de la surface du véhicule,
- et en ce que les jeux de données-modèles pour différentes directions incidentes sont obtenus par une seule opération de tarage à l'aide d'un émetteur de tarage à haute fréquence dont l'emplacement est connu, puis ces données sont enregistrées en mémoire.
